# EUROPEAN PATENT SPECIFICATION

(11) **EP 3 182 739 B1**
(45) Date of publication and mention of the grant of the patent: **05.08.2020**
(21) Application number: 16204097.6
(22) Date of filing: 14.12.2016
(51) Int. Cl.: H04W 4/02, H04L 29/08

(54) **METHOD AND APPARATUS FOR PROMPTING ACCORDING TO LOCATION-BASED INFORMATION**
VERFAHREN UND VORRICHTUNG ZUR AUFFORDERUNG ENTSPRECHEND DER STANDORTBASIERTEN INFORMATIONEN
PROCÉDÉ ET APPAREIL D'INVITE SUR LA BASE D'INFORMATIONS BASÉES SUR UN EMPLACEMENT

(30) Priority: 18.12.2015 CN 201510959206
(43) Date of publication of application: 21.06.2017
(73) Proprietor: Xiaomi Inc., Beijing 100085 (CN)
(72) Inventor: DING, Yi, Beijing, Beijing 100085 (CN); HOU, Enxing, Beijing, Beijing 100085 (CN); GAO, Ziguang, Beijing, Beijing 100085 (CN)
(74) Representative: dompatent von Kreisler Selting Werner - Partnerschaft von Patent- und Rechtsanwälten mbB

(56) References cited:
- EP-A1- 2 608 097
- CN-A- 105 163 266
- US-A1- 2013 217 333

## Description

### TECHNICAL FIELD

The present disclosure generally relates to the field of communication technology, and more particularly, to a method and an apparatus for prompting according to location-based information.

### BACKGROUND

With the development of Bluetooth technology, Bluetooth devices with various functions have been applied and popularized. For example, a Bluetooth anti-lost device (such as a Bluetooth anti-lost wristband, a Bluetooth anti-lost card, a Bluetooth anti-lost key ring and the like) cooperates with a phone to perform a prompt via the phone according to location information of the Bluetooth anti-lost device, such that a user may find the Bluetooth anti-lost device according to the prompt.

In the related art, the Bluetooth anti-lost device sends a communication message to the phone periodically after being bounded with the phone. The phone acquires signal intensity of the Bluetooth anti-lost device after receiving the communication message. Then, the phone acquires a current distance from a location of the Bluetooth anti-lost device to a location of the phone according to the signal intensity. The phone prompts the user in a ringing or vibration manner if the current distance is not in a designated range such that the user determines the location of the Bluetooth anti-lost device according to the prompt to further find the Bluetooth anti-lost device.

US 2013/217333 A1 discloses a method, a system and a device for presenting rewards to users based on proximity of short-range wireless devices.

EP 2608097 Al discloses a system and a method for locating lost or stolen electronic devices.

CN 105163266 A discloses a method and a device for locating a wearable device, in particular to recognize a separation of a wearable device from its respective terminal device carried by a child.

### SUMMARY

According to a first aspect of embodiments of the present disclosure, there is provided a method according to location-based information in accordance with claim 1. The method includes:
receiving a location-based information acquiring request sent by a designated terminal, in which the location-based information acquiring request at least includes a designated device identifier;
acquiring designated location-based information in a location-based information database, in which the designated location-based information matches with the designated device identifier, and location-based information reported by a plurality of terminals is stored in the location-based information database at least; and
sending the designated location-based information to the designated terminal, in which the designated terminal is configured to perform a prompt according to the designated location-based information.

The location-based information acquiring request further includes a user identifier of the designated terminal. Before acquiring the designated location-based information in the location-based information database, the method further includes:
judging whether there is a binding relationship between the user identifier and the designated device identifier according to a stored binding relationship; and
performing an act of acquiring the designated location-based information in the location-based information database under an event that there is the binding relationship.

Alternatively, the method further includes:
receiving location-based information reported by any one terminal; and
storing the location-based information received into the location-based information database.

The location-based information includes a device identifier, location information of a terminal and a time of reporting the location information.

According to a second aspect of embodiments of the present disclosure, there is provided a method according to location-based information in accordance with claim 3. The method includes:
sending a location-based information acquiring request to a server, in which the location-based information acquiring request at least includes a designated device identifier, such that the server returns designated location-based information according to the designated device identifier;
receiving the designated location-based information; and
performing a prompt according to the designated location-based information.

The sending time of the request is determined under an event that the server determines that there is a binding relationship between a user identifier of the first terminal and an identifier of the device, and the location matches with the identifier of the device in a database that stores a plurality of pieces of location information, a piece of location information comprising a device identifier, a location of a terminal and a time of reporting the location wherein the plurality of pieces of location information is reported by the second terminal when the second terminal receives a broadcast message indicating the device is unable to be connected to the first terminal.

Alternatively, the location-based information acquiring request further includes a user identifier of a designated terminal. Before sending the location-based information acquiring request to the server, the method further includes:
establishing a binding relationship between the user identifier and the designated device identifier; and
sending the binding relationship to the server.

According to a third aspect of embodiments of the present disclosure, there is provided a method according to location-based information. The method includes:
receiving a broadcast message of a device, in which the broadcast message includes a device identifier of the device;
acquiring self-location information and current time information; and
sending the device identifier of the device, the self-location information and the current time information to a server, in which the server stores the device identifier of the device, the self-location information and the current time information into a location-based information database, and location-based information reported by a plurality of terminals is stored in the location-based information database at least.

Alternatively, the method further includes:
providing an opening option of a location-based information sharing function; and
opening the location-based information sharing function under an event that a triggered operation on the opening option is detected, so as to send the device identifier of the device, the self-location information and the current time information to the server after receiving the broadcast message of the device.

According to a fourth aspect of embodiments of the present disclosure, there is provided an apparatus according to location-based information in accordance with claim 5. The apparatus includes: a processor; and a memory configured to store an instruction executable by the processor; wherein, the processor is configured to perform the method according to the first aspect of embodiments of the present disclosure.

According to a fifth aspect of embodiments of the present disclosure, there is provided an apparatus according to location-based information in accordance with claim 6. The apparatus includes: a processor; and a memory configured to store an instruction executable by the processor; wherein, the processor is configured to perform the method according to the second aspect of embodiments of the present disclosure.

According to a sixth aspect of embodiments of the present disclosure, there is provided an apparatus according to location-based information. The apparatus includes: a processor; and a memory configured to store an instruction executable by the processor; wherein, the processor is configured to perform the method according to the third aspect of embodiments of the present disclosure.

According to a seventh aspect of embodiments of the present disclosure in accordance with claim 7, a computer-readable storage medium is provided. The computer-readable storage medium has stored therein instructions that, when executed by a processor of a device, causes the device to perform the method according to the first aspect or second aspect or third aspect of embodiments of the present disclosure.

The technical solutions provided in embodiments of the present disclosure may include following advantageous effects.

The server acquires the designated location-based information matching with the designated device identifier in the location-based information database at least storing the location-based information reported by the plurality of terminals after receiving the location-based information acquiring request sent by the designated terminal; and sends the designated location-based information to the designated terminal, in which the designated terminal is configured to perform the prompt according to the designated location-based information. As the designated terminal may acquire location-based information of the device positioned by other terminals via the server, the user may find the device lost outside a connected region. Therefore, the method for prompting according to location-based information has a wide application scope and a high precision.

It is to be understood that, both the foregoing general description and the following detailed description are exemplary and explanatory only and are not restrictive of the present disclosure.

### BRIEF DESCRIPTION OF THE DRAWINGS

The accompanying drawings herein are incorporated in and become parts of the specification, illustrate embodiments consistent with the disclosure and, together with the description, serve to explain the principles of the disclosure.
Fig. 1 is a flow chart showing a method for prompting according to location-based information according to an exemplary embodiment.
Fig. 2 is a flow chart showing a method for prompting according to location-based information according to an exemplary embodiment.
Fig. 3 is a flow chart showing a method for prompting according to location-based information according to an exemplary embodiment.
Fig. 4 is a flow chart showing a method for prompting according to location-based information according to an exemplary embodiment.
Fig. 5 is a schematic diagram illustrating an interaction relating to a subject in a method for prompting according to location-based information.
Fig. 6 is a block diagram of an apparatus for prompting according to location-based information according to an exemplary embodiment.
Fig. 7 is a block diagram of an apparatus for prompting according to location-based information according to an exemplary embodiment.
Fig. 8 is a block diagram of an apparatus for prompting according to location-based information according to an exemplary embodiment.
Fig. 9 is a block diagram of an apparatus for prompting according to location-based information according to an exemplary embodiment.
Fig. 10 is a block diagram of an apparatus for prompting according to location-based information according to an exemplary embodiment.
Fig. 11 is a block diagram of an apparatus for prompting according to location-based information according to an exemplary embodiment.
Fig. 12 is a block diagram of an apparatus for prompting according to location-based information according to an exemplary embodiment.
Fig. 13 is a block diagram of a device for prompting according to location-based information according to an exemplary embodiment.
Fig. 14 is a block diagram of a device for prompting according to location-based information according to an exemplary embodiment.

### DETAILED DESCRIPTION

In order to make purposes, technical solutions and advantages of the present disclosure more clear, implementations of embodiments of the present disclosure will now be described in detail by combining with the accompanying drawings.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the appended claims.

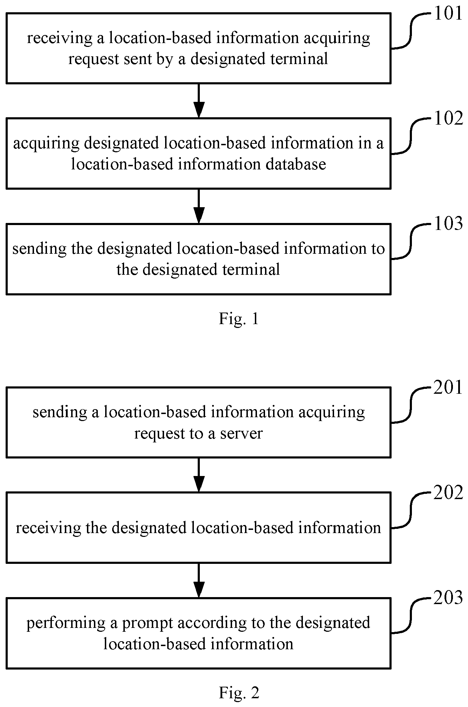

Fig. 1 is a flow char of a method for prompting according to location-based information according to an exemplary embodiment. As shown in Fig. 1, the method is applied in a server. The method includes followings.

In step 101, a location-based information acquiring request sent by a designated terminal is received.

The location-based information acquiring request at least includes a designated device identifier.

In step 102, designated location-based information is acquired in a location-based information database.

The designated location-based information matches with the designated device identifier, and location-based information reported by a plurality of terminals is stored in the location-based information database at least.

In step S103, the designated location-based information is sent to the designated terminal.

The designated terminal is configured to perform a prompt according to the designated location-based information.

With the method provided by embodiments of the present disclosure, the server may acquire the designated location-based information matching with the designated device identifier in the location-based information database at least storing the location-based information reported by the plurality of terminal after receiving the location-based information acquiring request sent by the designated terminal; and may send the designated location-based information to the designated terminal such that the designated terminal may perform the prompt according to the designated location-based information. As the designated terminal may acquire location-based information of the device positioned by other terminals via the server, a user may find the device lost outside a connected region. Therefore, the method for prompting according to location-based information has a wide application scope and a high precision.

Alternatively, the location-based information acquiring request further includes a user identifier of the designated terminal. Before acquiring the designated location-based information in the location-based information database, the method further includes:
judging whether there is a binding relationship between the user identifier and the designated device identifier according to a stored binding relationship; and
performing an act of acquiring the designated location-based information in the location-based information database under an event that there is the binding relationship.

Alternatively, the method further includes:
receiving location-based information reported by any one terminal; and
storing the location-based information received into the location-based information database.

Here and throughout the following description by the term "by any one terminal" is meant at least one terminal or more terminals of a plurality of terminals in particular different from the designated terminal, which is interchangeably denoted as sharing terminal, which shares the location-based information.

Alternatively, the location-based information includes a device identifier, location information of a terminal and a time of reporting the location information.

All above alternative technical solutions may adopt any combinations to form alternative embodiments of the present disclosure, which is not elaborated herein.

Fig. 2 is a flow chart of a method for prompting according to location-based information according to an exemplary embodiment. As shown in Fig. 2, the method is applied in a designated terminal. The method includes followings.

In step 201, a location-based information acquiring request is sent to a server.

The location-based information acquiring request at least includes a designated device identifier such that the server returns designated location-based information according to the designated device identifier.

In step 202, the designated location-based information is received.

In step 203, a prompt is performed according to the designated location-based information.

With the method provided by embodiments of the present disclosure, the designated terminal may receive the designated location-based information returned by the server according to the designated device identifier after sending the location-based information acquiring request at least including the designated device identifier to the server; and may perform the prompt according to the designated location-based information. As the designated terminal may acquire location-based information of the designated device via the server, a user may find the device lost outside a connected region. Therefore, the method for prompting according to location-based information has a wide application scope and a high precision.

Alternatively, the location-based information acquiring request further includes a user identifier of the designated terminal. Before sending the location-based information acquiring request to the server, the method further includes:
establishing a binding relationship between the user identifier and the designated device identifier; and
sending the binding relationship to the server.

All above alternative technical solutions may adopt any combinations to form alternative embodiments of the present disclosure, which is not elaborated herein.

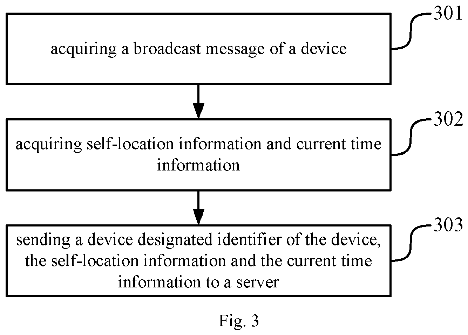

Fig. 3 is a flow chart showing a method for prompting according to location-based information according to an exemplary embodiment. As shown in Fig. 3, the method is applied in any one terminal. The method includes followings.

In step 301, a broadcast message of a device is received.

The broadcast message includes a device identifier of the device.

In step 302, self-location information and current time information is acquired.

In step 303, the device identifier of the device, the self-location information and the current time information are sent to a server.

The server is configured to store the device identifier of the device, the self-location information and the current time information into a location-based information database, and location-based information reported by a plurality of terminals is stored in the location-based information database at least.

With the method of embodiments of the present disclosure, any one terminal may acquire the self-location information and the current time information after receiving the broadcast message of the device including the device identifier; and may send the device identifier of the device, the self-location information and the current time information to the server, and the server stores the device identifier of the device, the self-location information and the current time information into the location-based information database. As any one terminal may send location-based information of devices around the self-location thereof to the server and the server stores the acquired location-based information of devices around the self-location of various terminals into the location-based information database, a source of acquiring location-based information of the devices may be wider. Therefore, the method for prompting according to location-based information has a wide application scope and a high precision.

Alternatively, the method further includes:
providing an opening option of a location-based information sharing function; and
opening the location-based information sharing function under an event that a triggering operation on the opening option is detected, so as to send the device identifier of the device, the self-location information and the current time information to the server after receiving the broadcast message of the device.

All above alternative technical solutions may adopt any combinations to form alternative embodiments of the present disclosure, which is not elaborated herein.

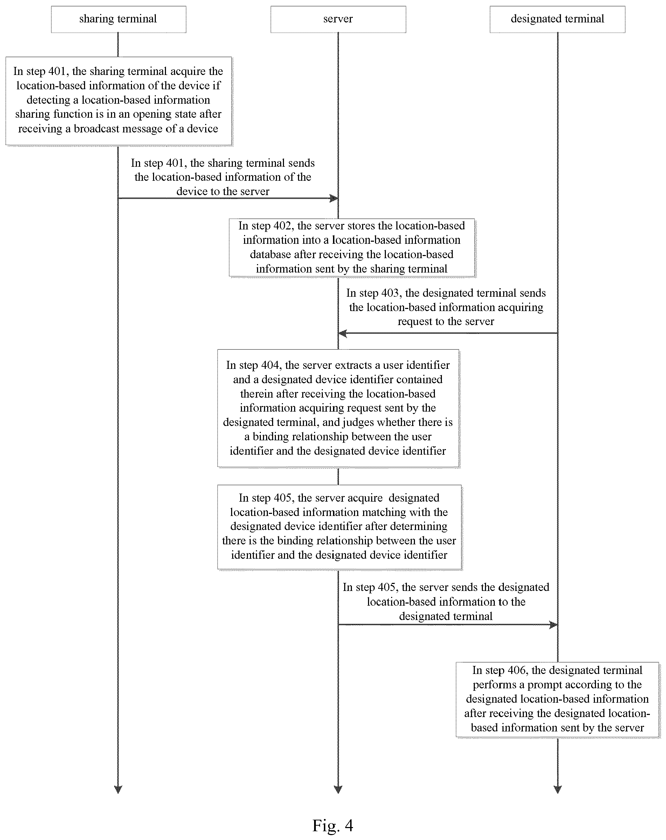

Fig. 4 is a flow chart showing a method for prompting according to location-based information according to an exemplary embodiment. The related interactional subject is a sharing terminal, a designated terminal and a server. Mentioned in embodiments of the present disclosure, the device refers to a Bluetooth device; the designated device refers to a designated Bluetooth device; the sharing terminal refers to a terminal sending location-based information of the device to the server; and the designated terminal refers to a terminal landed by an owner of the designated device. As shown in Fig. 4, the method includes followings.

In step 401, the sharing terminal acquires location-based information of the device and sends the location-based information of the device to the server if detecting a location-based information sharing function is in an opening state after receiving a broadcast message of the device.

The location-based information of the device includes a device identifier of the device, self-location information of the sharing terminal and current time information of the sharing terminal. The device identifier of the device may be a unique device identifier (such as a MAC (Media Access Control) address of the device, and a serial number of the device), which is not specifically limited in embodiments of the present disclosure. The device supports BLE (Bluetooth Low Energy) technology and has an anti-lost function, for example, a Bluetooth anti-lost wristband, a Bluetooth anti-lost surface mounted device, a Bluetooth anti-lost card, a Bluetooth anti-lost key ring and the like, which is not specifically limited in the embodiments of the present disclosure. The device may be carried on an object, a human or an animal to avoid losing the object, the human and the animal.

In embodiments of the present disclosure, the device may broadcast the broadcast message (such as beacons) containing a self-device-identifier towards surroundings periodically after being powered on. The sharing terminal supports the BLE technology such that it may scan a surrounding device after opening a Bluetooth function. The sharing terminal may display information related to the device on a scan result list of the devices if detecting a broadcast message of any one terminal. The information may be, for example, a brand, a version and a device identifier of the device, which is not specifically limited in embodiments of the present disclosure. Furthermore, the sharing terminal further has the location-based information sharing function and provides an opening option of the location-based information sharing function on a setting interface. The location-based information sharing function may be opened if it is detected a triggering operation on the opening option of a user.

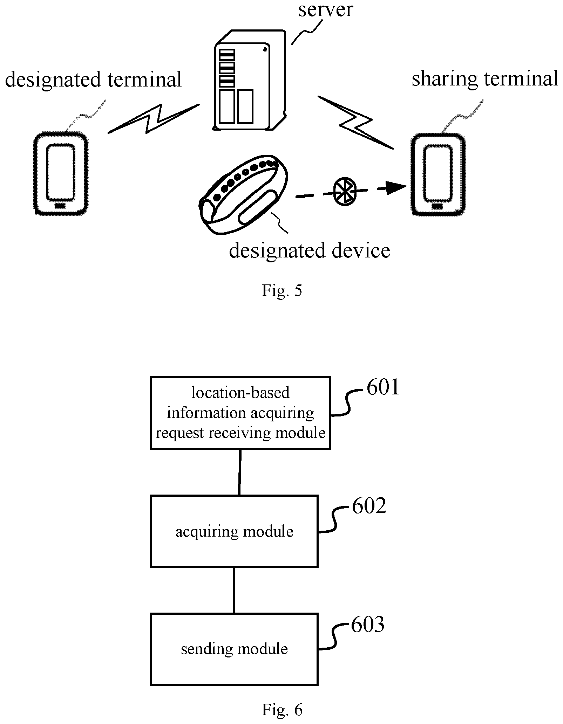

In embodiments of the present disclosure, in order to enlarge a region of acquiring location-based information of the device so as to help the owner find the designated device via the designated terminal after the designated device is lost, the sharing terminal may acquire a designated device identifier, self-location information and current time information from the broadcast message and sends them to the server as location-based information of the designated device if detecting the location-based information sharing function is in an opening state, after receiving the broadcast message of the designated device. As a result, the owner may acquire the location-based information of the designated device from the server via the designated terminal after the designated device is lost. An interaction between the designated terminal, the sharing terminal, the server and the designated device on information may implement to find the lost device. A diagram of the interaction among them is shown in Fig. 5.

It is to be illustrated that, the designated terminal may also report the location-based information of the designated terminal to the server if the designated device is still connected to the designated terminal loaded by the owner and it is not lost. The sharing terminal may also upload the location-based information of the designated device to the server. The sharing terminal may display a prompt message for opening the location-based information sharing function and a corresponding open button if detecting that the location-based information sharing function is in a closed state after receiving the broadcast message of the device. The prompt message may be a form of message popping or message pushing. The content of the prompt message may be "Prefer to participate in 'XX plan' or not", "Open the location-based information sharing function or not" and the like. There is no limitation on a specific form and a specific content of the prompt message in embodiments of the present disclosure.

In step 402, after receiving the location-based information sent by the sharing terminal, the server stores the location-based information into a location-based information database.

In embodiments of the present disclosure, the server stores location-based information of a plurality of terminals. The location-based information includes a device identifier of the device, location information of a terminal at a moment of sending the location-based information, and time information. All information is stored in the location-based information database. One storing form is shown as Table 1.

**Table 1**

| Device identifier | Location | Time |
|---|---|---|
| A | location1 | time1 |
| B | location2 | time2 |
| ...... | ...... | ...... |
| A | location3 | time3 |
| ...... | ...... | ...... |

All data in the location-based information database are acquired by the server from the location-based information sent by the sharing terminal. The server extracts the device identifier, the location information of the terminal and the current time information contained in the location-based information and correspondingly stores them into the location-based information database after receiving the location-based information sent by the sharing terminal.

It is to be illustrated that, the server may store the location-based information after receiving the location-based information no matter whether a step 403 below is executed.

In step 403, the location-based information acquiring request is sent to the server by the designated terminal.

In embodiments of the present disclosure, the designated terminal may establish a communication connection with the designated device via the Bluetooth. The designated terminal may acquire the location information of the designated device in a near region after establishing the connection such that a user may find the designated device according to the location information. The communication connection between the designated terminal and the designated device may be broken if the distance of the designated terminal from the designated device exceeds a maximum connection distance. Then the designated terminal may be unable to continue to acquire the location information of the designated device such that the user may be unable to find the designated device according to the location information of the designated terminal. In order to find the designated device back, the user may send the location-based information acquiring request to the server via the designated terminal such that the server may acquire location-based information related to the designated device reported by other terminals.

The location-based information acquiring request at least includes a user identifier used when the user logins the designated terminal and a designated device identifier such that the server may judge whether the location-based information acquiring request is legitimate according to the user identifier and the designated device identifier.

It is to be illustrated that, in order to help the user to manage owned devices better, the user may establish a binding relationship between the user identifier and the designated device identifier via the designated terminal. For a device established the binding relationship, the designated terminal may store the designated device identifier and may perform a prompt to connect to the device after finding the broadcast message containing the designated device identifier. The designated terminal may send the established binding relationship to the server such that the server may judge whether the location-based information acquiring request of the user for the designated device is legitimate according to the binding relationship.

In step 404, the server extracts the user identifier and the designated device identifier contained therein after receiving the location-based information acquiring request sent by the designated terminal and judges whether there is the binding relationship between the user identifier and the designated device identifier.

In embodiment of the present disclosure, in order to ensure security of user information and avoid leak of the user information, the server may judge whether the location-based information acquiring request is legitimate after receiving the location-based information acquiring request sent by the designated terminal. The server may perform a corresponding process only on the legitimate location-based information acquiring request. Judging whether the location-based information acquiring request is legitimate includes followings.

The server extracts the user identifier and the designated device identifier contained therein; judges whether there is the binding relationship between the user identifier and the designated device identifier according to a stored binding relationship; and determines that the location-based information acquiring request is legitimate under an event that there is the binding relationship and then performs a step 405 below.

It is to be illustrated that, the server may determine that the location-based information acquiring request is illegitimate if there is no binding relationship between the user identifier and the designated device identifier. Then, the server may not perform any processes or return a message of access being prohibited according to the user identifier of the designated terminal, which is not specifically limited in the embodiments of the present disclosure.

In step 405, the server acquires designated location-based information matching with the designated device identifier in the location-based information database under an event that it is determined there is the binding relationship between the user identifier and the designated device identifier.

In embodiments of the present disclosure, the designated location-based information refers to location-based information for the designated device. The server may search whether the designated location-based information matching with the designated device identifier exists under an event that it is determined there is the binding relationship between the user identifier and the designated device identifier (i.e. the location-based information acquiring request is legitimate). The server may acquire the designated location-based information and may send the designated location-based information to the designated terminal if the binding relationship exists. The designated location-based information may be sent to the designated terminal in a page form such that the designated terminal may display the designated location-based information on a designated page. Or the designated information may also be sent to the designated terminal in a message form, in which the message includes text information corresponding to the designated location-based information, such that the designated terminal may directly display content of the message after receiving the message. A sending form of the designated location-based information is not specifically limited in embodiments of the present disclosure.

In another embodiment, generally, the user sends the location-based information acquiring request to the server via the designated terminal after the designated device is lost. At this moment, the user takes care of the location-based information of the designated device after sending the location-based information acquiring request. As a result, perfectly, the server may acquire a receiving time of the location-based information acquiring request after determining that the location-based information acquiring request is legitimate. Then the server may acquire the designated location-based information which is after the receiving time and matches with the designated device identifier, in the location-based information database, and may send the designated location-based information to the designated terminal. Furthermore, in a case of the designated terminal is not lost, in order to avoid unnecessary consumption of traffic and electricity resulted from reporting the location-based information of the designated device by other terminals, a setting may be performed on the designated device as follows: broadcasting a first broadcast message towards surroundings if the designated device is connected to the designated terminal; not executing acts of acquiring and sending the location-based information by the sharing terminal if receiving the first broadcast message and determining that the designated device is in a connected state. The designated device may broadcast a second broadcast message towards surroundings if detecting to be unconnected to the designated terminal and being unable to be connected to the designated terminal in a pre-set period of time. The sharing terminal may perform acts of acquiring and sending the location-based information if receiving the second broadcast message and determining that the designated device is in an unconnected state. The first broadcast message may carry a first identifier (such as setting 0 on a designated position) and the second broadcast message may carry a second identifier (such as setting 1 on the designated position).

It is to be illustrated that, according to the time, the server may sort the designated location-based information or perform other processes on the designated location-based information, and then may send the designated location-based information to the designated terminal, which is not specifically limited in embodiments of the present disclosure. The server may send new location-based information to the designated terminal if subsequently receiving the new location-based information with respect to the designated device, after sending the designated location-based information to the designated terminal at a first time according to the location-based information acquiring request.

In step 406, the designated terminal performs a prompt according to the designated location-based information after receiving the designated location-based information sent by the server.

In embodiments of the present disclosure, the user may acquire the location-based information of the designated device via the designated terminal. In order to make the user acquire the location-based information of the designated device in time, the designated terminal may perform the prompt according to the designated location-based information after receiving the designated location-based information sent by the server. A prompt form may include vibration, ringing, voice broadcasting, popping, message pushing and the like, which is not specifically limited in embodiments of the present disclosure. It may perform the prompt using one of the above prompt forms or using a combination thereof, which is not specifically limited in embodiments of the present disclosure.

With the method provided in embodiments of the present discourse, the server may receive the location-based information reported by the sharing terminal and may store the location-based information into the location-based information database; the designated terminal may send the location-based information acquiring request to the server; the server may extract the user identifier and the designated device identifier therefrom after receiving the location-based information acquiring request; the server may acquire the designated location-based information matching with the designated device identifier in the location-based information database after determining there is the binding relationship between the user identifier and the designated device identifier; the server may send the designated location-based information to the designated terminal; and the designated terminal may perform the prompt according to the received designated location-based information. As the designated terminal may acquire the location-based information of the device positioned by other terminals via the server after being unconnected to the device, the user may find the device lost outside a connected region. Therefore, this method for prompting according to location-based information has a wide application scope and a high precision.

Fig. 6 is a block diagram of an apparatus for prompting according to location-based information according to an exemplary embodiment. Referring to Fig. 6, the apparatus includes a location-based information acquiring request receiving module 601, an acquiring module 602 and a sending module 603.

The location-based information acquiring request receiving module 601, connected with the acquiring module 602, is configured to receive a location-based information acquiring request sent by a designated terminal, in which the location-based information acquiring request at least includes a designated device identifier. The acquiring module 602, connected with the sending module 603, is configured to acquire designated location-based information in a location-based information database, in which the designated location-based information matches with the designated device identifier, and location-based information reported by a plurality of terminals is stored in the location-based information database at least. The sending module 603 is configured to send the designated location-based information to the designated terminal, in which the designated terminal is configured to perform a prompt according to the designated location-based information.

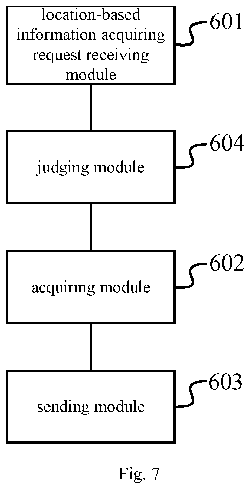

Alternatively, the location-based information acquiring request further includes a user identifier of the designated terminal, and as shown in Fig. 7, the apparatus further includes: a judging module 604.

The judging module 604 is configured to judge whether there is a binding relationship between the user identifier and the designated device identifier according to a stored binding relationship; and
the acquiring module 602 is further configured to execute an act of acquiring the designated location-based information in the location-based information database under an event that there is the binding relationship.

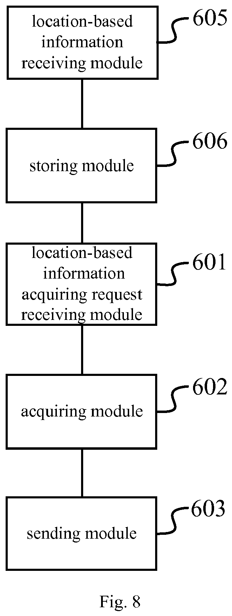

Alternatively, as shown in Fig. 8, the apparatus further includes: a location-based information receiving module 605 and a storing module 606.

The location-based information receiving module 605 is configured to receive location-based information reported by an arbitrary terminal.

The storing module 606 is configured to store the location-based information received into the location-based information database.

Alternatively, the location-based information includes a device identifier, location information of a terminal and a time of reporting the location information.

The apparatus provided in embodiments of the present disclosure, may acquire the designated location-based information matching with the designated device identifier in the location-based information database at least storing the location-based information reported by the plurality of the terminal after receiving the location-based information acquiring request sent by the designated terminal; and may send the designated location-based information to the designated terminal, in which the designated terminal is configured to perform the prompt according to the designated location-based information. As the designated terminal may acquire location-based information of the device positioned by other terminal via the server, a user may find the device lost outside a connected region. Therefore, this apparatus for prompting according to location-based information has a wide application scope and a high precision.

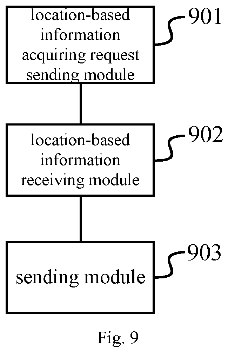

Fig. 9 is a block diagram of an apparatus for prompting according to location-based information according to an exemplary embodiment. Referring to Fig. 9, the apparatus includes a location-based information acquiring request sending module 901, a location-based information receiving module 902 and a prompting module 903.

The location-based information acquiring request sending module 901, connected with the location-based information receiving module 902, is configured to send a location-based information acquiring request to a server, in which the location-based information acquiring request at least includes a designated device identifier, such that the server returns designated location-based information according to the designated device identifier. The location-based information receiving module 902, connected with the prompting module 903, is configured to receive the designated location-based information. The prompting module 903 is configured to perform a prompt according to the designated location-based information.

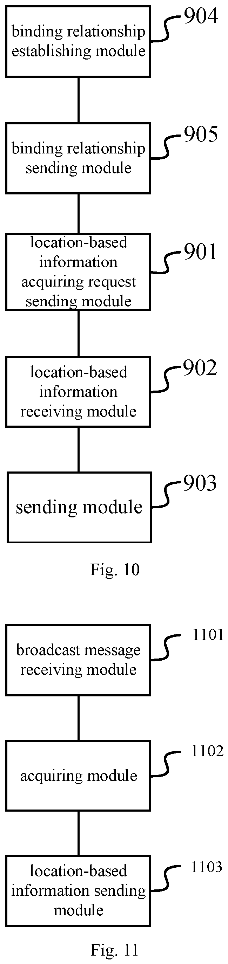

Alternatively, the location-based information acquiring request further includes a user identifier of a designated terminal. As shown in Fig. 10, the apparatus further includes: a binding relationship establishing module 904 and a binding relationship sending module 905.

The binding relationship establishing module 904 is configured to establish a binding relationship between the user identifier and the designated device identifier.

The binding relationship sending module 905 is configured to send the binding relationship to the server.

The apparatus provided in embodiments of the present disclosure, receive the designated location-based information returned by the server according to the designated device identifier after sending the location-based information acquiring request at least including the designated device identifier; and perform the prompt according to the designated location-based information. As the designated terminal may acquire the location-based information of the designated device via the server, a user may find the device lost outside a connected region. Therefore, this apparatus for prompting according to location-based information has a wide application scope and a high precision.

Fig. 11 is a block diagram of an apparatus for prompting according to location-based information according to an exemplary embodiment. Referring to Fig. 11, the apparatus includes a broadcast message receiving module 1101, an acquiring module 1102 and a location-based information sending module 1103.

The broadcast message receiving module 1101, connected with the acquiring module 1102, is configured to receive a broadcast message of a device, in which the broadcast message includes a device identifier of the device. The acquiring module 1102, connected with the location-based information sending module 1103, is configured to acquire self-location information and current time information. The location-based information sending module 1103 is configured to send the device identifier, the self-location information and the current time information to a server, in which the server stores the device identifier of the device, the self-location information and the current time information into a location-based information database, and location-based information reported by a plurality of terminals is stored in the location-based information database at least.

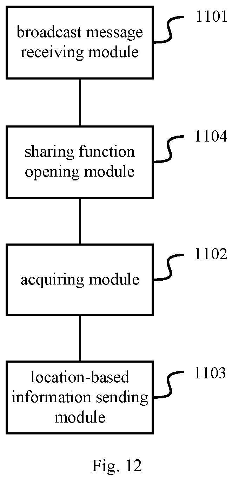

Alternatively, as shown in Fig. 12, the apparatus further includes: a sharing function opening module 1104,

The sharing function opening module 1104 is configured to provide an opening option of a location-based information sharing function; and
the sharing function opening module 1104 is further configured to open the location-based information sharing function under an event that a triggering operation on the opening option is detected so as to send the device identifier of the device, the self-location information and the current time information to the server after receiving the broadcast message of the device..

The apparatus provided in embodiments of the present disclosure, may acquire the self-location information and the current time information after receiving the broadcast message of the device; and send the device identifier of the device, the self-location information and the current time information to the server, in which the server may store the device identifier of the device, the self-location information and the current time information into the location-based information database. As any one terminal may send location-based information of devices around the self-location thereof to the server and the server may store the acquired location-based information of devices around the self-location of various devices into the location-based information database, a source of acquiring location-based information of the devices may be wider. Therefore, the method for prompting according to location-based information has a wide application scope and a high precision.

With respect to the apparatuses in the above embodiments, the specific manners for performing operations for individual modules therein have been described in detail in the embodiments regarding the methods, which are not elaborated herein again.

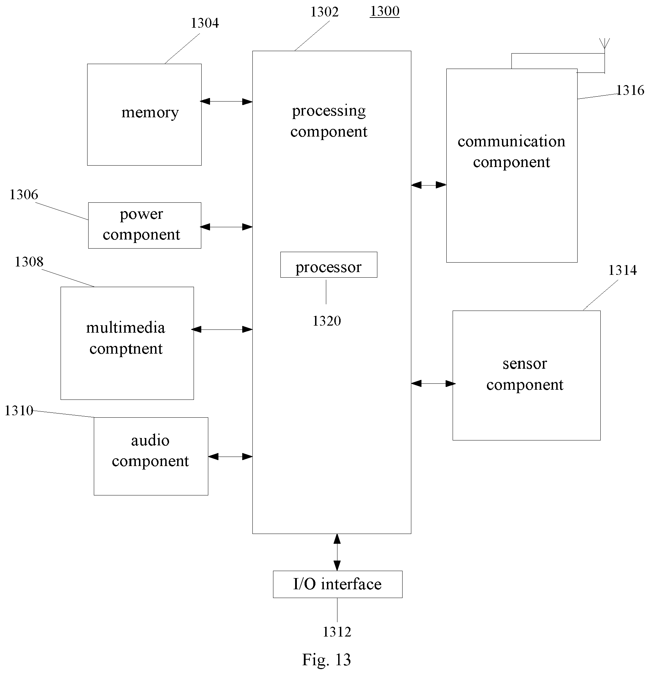

Fig. 13 is a block diagram showing a device for prompting according to location-based information according to an exemplary embodiment. For example, the apparatus 1300 may be a mobile phone, a computer, a digital broadcasting terminal, a messaging device, a game console, a tablet device, a medical device, fitness equipment, a Personal Digital Assistant PDA, and the like.

Referring to Fig. 13, the device 1300 may include the following one or more components: a processing component 1302, a memory 1304, a power component 1306, a multimedia component 1308, an audio component 1310, an Input/Output (I/O) interface 1312, a sensor component 1314, and a communication component 1316.

The processing component 1302 typically controls overall operations of the device 1300, such as the operations associated with display, telephone calls, data communications, camera operations, and recording operations. The processing component 1302 may include one or more processors 1320 to execute instructions to perform all or part of the steps in the above described methods. Moreover, the processing component 1302 may include one or more modules which facilitate the interaction between the processing component 1302 and other components. For instance, the processing component 1302 may include a multimedia module to facilitate the interaction between the multimedia component 1308 and the processing component 1302.

The memory 1304 is configured to store various types of data to support the operation of the device 1300. Examples of such data include instructions for any applications or methods operated on the device 1300, contact data, phonebook data, messages, pictures, video, etc. The memory 1304 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1306 provides power to various components of the device 1300. The power component 1306 may include a power management system, one or more power sources, and any other components associated with the generation, management, and distribution of power in the device 1300.

The multimedia component 1308 includes a screen providing an output interface between the device 1300 and the user. In some embodiments, the screen may include a liquid crystal display (LCD) and a press panel (TP). If the screen includes the press panel, the screen may be implemented as a press screen to receive input signals from the user. The press panel includes one or more press sensors to sense presses, swipes, and other gestures on the press panel. The press sensors may not only sense a boundary of a press or swipe action, but also sense a duration time and a pressure associated with the press or swipe action. In some embodiments, the multimedia component 1308 includes a front camera and/or a rear camera. The front camera and/or the rear camera may receive external multimedia data while the device 1300 is in an operation mode, such as a photographing mode or a video mode. Each of the front camera and the rear camera may be a fixed optical lens system or have focus and optical zoom capability.

The audio component 1310 is configured to output and/or input audio signals. For example, the audio component 1310 includes a microphone (MIC) configured to receive an external audio signal when the device 1300 is in an operation mode, such as a call mode, a recording mode, and a voice recognition mode. The received audio signal may be further stored in the memory 1304 or transmitted via the communication component 1316. In some embodiments, the audio component 1310 further includes a speaker to output audio signals.

The I/O interface 1312 provides an interface for the processing component 1302 and peripheral interface modules, such as a keyboard, a click wheel, buttons, and the like. The buttons may include, but are not limited to, a home button, a volume button, a starting button, and a locking button.

The sensor component 1314 includes one or more sensors to provide status assessments of various aspects of the device 1300. For instance, the sensor component 1314 may detect an open/closed status of the device 1300 and relative positioning of components (e.g. the display and the keypad of the device 1300). The sensor component 1314 may also detect a change in position of the device 1300 or of a component in the device 1300, a presence or absence of user contact with the device 1300, an orientation or an acceleration/deceleration of the device 1300, and a change in temperature of the device 1300. The sensor component 1314 may include a proximity sensor configured to detect the presence of nearby objects without any physical contact. The sensor component 1314 may also include a light sensor, such as a CMOS or CCD image sensor, for use in imaging applications. In some embodiments, the sensor component 1314 may also include an accelerometer sensor, a gyroscope sensor, a magnetic sensor, a pressure sensor, or a temperature sensor.

The communication component 1316 is configured to facilitate wired or wireless communication between the device 1300 and other devices. The device 1300 can access a wireless network based on a communication standard, such as WIFI, 2G, or 3G, or a combination thereof. In one exemplary embodiment, the communication component 1316 receives a broadcast signal or broadcast associated information from an external broadcast management system via a broadcast channel. In one exemplary embodiment, the communication component 1316 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1300 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as the memory 1304 including instructions. The above instructions are executable by the processor 1318 in the device 1300, for performing the above-described methods. For example, the non-transitory computer-readable storage medium may be a ROM, a RAM, a CD-ROM, a magnetic tape, a floppy disc, an optical data storage device, and the like.

In exemplary embodiments, there is also provided a non-transitory computer readable storage medium. A mobile terminal performs the above methods for prompting according to location-based information if the instruction in the storage medium is executed by the processor in the mobile terminal.

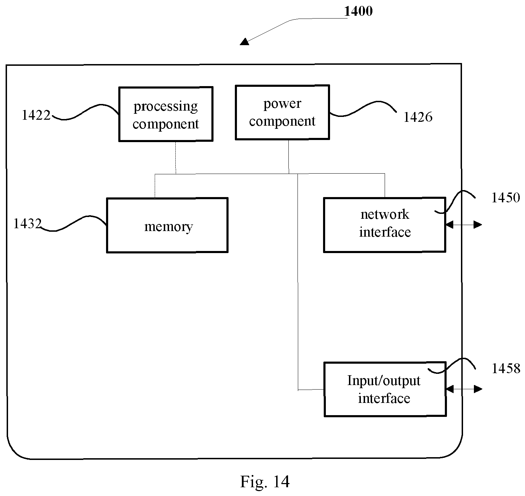

Fig. 14 is a block diagram of a device for prompting location-based information according to an exemplary embodiment. For example, the device 1400 may be provided to be a server. Referring to Fig. 14, the device 1400 includes a processing component 1422 which further includes one or more processor, and storage resources represented by a memory 1432, configured to store an instruction executed by the processing component 1422, such as an application. The application stored in the memory 1432 may include one or more than one module corresponding to a set of instructions. Furthermore, the processing component 1422 is configured to execute an instruction to execute the method executed by the server in method embodiment for prompting according to location-based information.

The device 1400 further includes a power component configured to execute a power manage of the device 1400, a wired or wireless network interface configured to connect the device 1400 to network, and an input/output (I/O) interface 1458. The device 1400 may execute an operation system stored in the memory 1432, such as a Windows Server TM, a Mac OS XTM, a Unix TM a Linux TM, a FreeBSDTM and the like.

Other embodiments of the disclosure will be apparent to those skilled in the art from consideration of the specification and practice of the disclosure disclosed here.

## Claims

1. A method implemented in a server, comprising:
receiving (101) a request sent by a first terminal, wherein the request is a request for a location of a device, and the request comprises an identifier of the device and a user identifier of the first terminal;
judging whether there is a binding relationship between the user identifier and the identifier of the device according to a stored binding relationship;
acquiring a receiving time of the request under an event that there is the binding relationship;
acquiring (102) location information that corresponds to a time point after the receiving time
and matches with the identifier of the device in a database that stores a plurality of pieces of location information, wherein each piece of location information comprises a device identifier, a location of a terminal and a time of reporting the location, the plurality of pieces of location information are reported by a plurality of second terminals, and each location is reported by a second terminal when the second terminal receives a broadcast message indicating the device is unable to be connected to the first terminal; and
sending (103) the location to the first terminal in response to the request, such that the first terminal provides an indication to a user of the first terminal according to the location.

2. The method according to claim 1, further comprising:
receiving location information reported by any one terminal; and
storing the location information received into the database.

3. A method implemented in a first terminal, comprising:
sending (201) a request for a location of a device to a server, wherein the request comprises an identifier of the device and a user identifier of a first terminal;
receiving (202) a location in response to the request from the server, wherein the location is reported after a sending time of the request, the sending time of the request being determined under an event that the server determines that there is a binding relationship between the user identifier of the first terminal and the identifier of the device, and the location matching with the identifier of the device in a database that stores a plurality of pieces of location information, a piece of location information comprising a device identifier, a location of a terminal and a time of reporting the location, the plurality of pieces of location information being reported by a second terminal
when the second terminal receives a broadcast message indicating the device is unable to be connected to the first terminal; and
providing (203) an indication to a user of the first terminal according to the location.

4. The method according to claim 3, wherein the request further comprises a user identifier of the first terminal, and before sending (201) the request for a location of a device to a server, the method further comprises:
establishing a binding relationship between the user identifier of the first terminal and the identifier of the device; and
sending the binding relationship to the server.

5. A server, comprising:
a processor; and
a memory configured to store an instruction executable by the processor;
wherein, the processor is configured to perform the method according to claim 1 or 2.

6. A first terminal, comprising:
a processor; and
a memory configured to store an instruction executable by the processor;
wherein, the processor is configured to perform the method according to claim 3 or 4.

7. A computer-readable storage medium having stored therein instructions that, when executed by a processor of a device, causes the device to perform a method according to any one of claims 1 to 4.

## Patentansprüche

1. In einem Server implementiertes Verfahren mit den Schritten:
Empfangen (101) einer von einem ersten Endgerät gesendeten Anfrage, wobei diese Anfrage eine Anfrage nach einer Position einer Vorrichtung ist und die Anfrage eine Kennung der Vorrichtung und eine Nutzerkennung des ersten Terminals aufweist;
Beurteilen anhand einer gespeicherten Verknüpfungsbeziehung, ob eine Verknüpfungsbeziehung zwischen der Nutzerkennung und der Kennung der Vorrichtung besteht;
Erfassen einer Empfangszeit der Anfrage, in dem Fall, dass eine gültige Beziehung vorliegt;
Erfassen (102) von Positionsinformationen, die einem Zeitpunkt nach der Erfassungszeit entsprechen und mit der Kennung der Vorrichtung in einer Datenbank übereinstimmen, welche mehrere Positionsinformationssätze speichert, wobei jeder Positionsinformationssatz eine Vorrichtungskennung, eine Position eines Endgeräts und eine Zeit der Mitteilung der Position aufweist, wobei die mehreren Positionsinformationssätze von mehreren zweiten Endgeräten mitgeteilt werden und jede Position von einem zweiten Endgerät mitgeteilt wird, wenn das zweite Endgerät eine Broadcast-Nachricht empfängt, welche angibt, dass die Vorrichtung nicht mit dem ersten Endgerät verbunden werden kann; und
Senden (103) der Position an das erste Endgerät in Reaktion auf die Anfrage, derart dass das erste Endgerät einem Nutzer des ersten Endgeräts eine Angabe bezüglich der Position liefert.

2. Verfahren nach Anspruch 1, ferner mit den Schritten:
Empfangen von Positionsinformationen, welche von einem beliebigen Endgerät mitgeteilt werden; und
Speichern der empfangenen Positionsinformationen in der Datenbank.

3. In einem ersten Endgerät implementiertes Verfahren mit den Schritten:
Senden (201) einer Anfrage nach einer Position einer Vorrichtung an einen Server, wobei die Anfrage eine Kennung der Vorrichtung und eine Nutzerkennung des ersten Endgeräts aufweist;
Empfangen (202) einer Position von dem Server in Reaktion auf die Anfrage, wobei die Position nach einer Sendezeit der Anfrage mitgeteilt wird, wobei die Sendezeit der Anfrage in dem Fall bestimmt wird, dass der Server feststellt, dass eine Verknüpfungsbeziehung zwischen der Nutzerkennung des ersten Endgeräts und der Kennung der Vorrichtung vorliegt, und wobei die Position mit der Kennung der Vorrichtung in einer Datenbank übereinstimmt, welche mehrere Positionsinformationssätze speichert, wobei jeder Positionsinformationssatz eine Vorrichtungskennung, eine Position eines Endgeräts und eine Zeit der Mitteilung der Position aufweist, wobei die mehreren Positionsinformationssätze von einem zweiten Endgeräten mitgeteilt werden, wenn das zweite Endgerät eine Broadcast-Nachricht empfängt, welche angibt, dass die Vorrichtung nicht mit dem ersten Endgerät verbunden werden kann; und
Liefern (203) einer Angabe an einen Nutzer des ersten Endgeräts entsprechend der Position.

4. Verfahren nach Anspruch 3, bei welchem die Anfrage ferner eine Nutzerkennung des ersten Endgeräts aufweist und das Verfahren vor dem Senden (201) der Anfrage nach einer Position einer Vorrichtung an einen Server ferner die folgenden Schritte aufweist:
Herstellen einer Verknüpfungsbeziehung zwischen der Nutzerkennung des ersten Endgeräts und der Kennung der Vorrichtung, und
Senden der Verknüpfungsbeziehung an den Server.

5. Server mit:
einem Prozessor; und
einem Speicher, der dazu ausgebildet ist, einen von dem Prozessor ausführbaren Befehl zu speichern, wobei der Prozessor dazu ausgebildet ist, das Verfahren nach Anspruch 1 oder 2 auszuführen.

6. Erstes Endgerät mit:
einem Prozessor; und
einem Speicher, der dazu ausgebildet ist, einen von dem Prozessor ausführbaren Befehl zu speichern, wobei der Prozessor dazu ausgebildet ist, das Verfahren nach Anspruch 3 oder 4 auszuführen.

7. Computerlesbares Speichermedium, in welchem Befehle gespeichert sind, welche bei der Ausführung durch einen Prozessor der Vorrichtung die Vorrichtung veranlassen, ein Verfahren nach einem der Ansprüche 1 bis 4 auszuführen.

## Revendications

1. Procédé mis en œuvre dans un serveur, comprenant le fait de:
recevoir (101) une demande envoyée par un premier terminal, où la demande est une demande d'emplacement d'un dispositif, et la demande comprend un identificateur du dispositif et un identificateur d'utilisateur du premier terminal;
juger s'il existe un rapport étroit entre l'identificateur d'utilisateur et l'identificateur du dispositif selon un rapport étroit mémorisé;
acquérir un moment de réception de la demande au cas où il existe un rapport étroit;
acquérir (102) les informations d'emplacement qui correspondent à un moment après le moment de réception et qui correspondent à l'identificateur du dispositif dans une base de données qui mémorise une pluralité d'informations d'emplacement, où chaque information d'emplacement comprend un identificateur de dispositif, un emplacement d'un terminal et un moment de rapport de l'emplacement, la pluralité d'informations d'emplacement sont rapportées par une pluralité de deuxièmes terminaux, et chaque emplacement est rapporté par un deuxième terminal lorsque le deuxième terminal reçoit un message de diffusion indiquant que le dispositif n'est pas à même d'être connecté au premier terminal; et
envoyer (103) l'emplacement au premier terminal en réponse à la demande, de sorte que le premier terminal fournisse une indication à un utilisateur du premier terminal selon l'emplacement.

2. Procédé selon la revendication 1, comprenant par ailleurs le fait de:
recevoir les informations d'emplacement rapportées par un terminal quelconque; et
mémoriser les informations d'emplacement reçues dans la base de données.

3. Procédé mis en œuvre dans un premier terminal, comprenant le fait de:
envoyer (201) une demande d'un emplacement d'un dispositif à un serveur, où la demande comprend un identificateur du dispositif et un identificateur d'utilisateur d'un premier terminal;
recevoir (202) un emplacement en réponse à la demande du serveur, où l'emplacement est rapporté après un moment d'envoi de la demande, le moment d'envoi de la demande étant déterminé au cas où le serveur détermine qu'il existe un rapport étroit entre l'identificateur d'utilisateur du premier terminal et l'identificateur du dispositif, et l'emplacement correspondant à l'identificateur du dispositif dans une base de données qui mémorise une pluralité d'informations d'emplacement, une information d'emplacement comprenant un identificateur de dispositif, un emplacement d'un terminal et un moment de rapport de l'emplacement, la pluralité d'informations d'emplacement étant rapportées par un deuxième terminal lorsque le deuxième terminal reçoit un message de diffusion indiquant que le dispositif n'est pas à même d'être connecté au premier terminal; et
fournir (203) une indication à un utilisateur du premier terminal selon l'emplacement.

4. Procédé selon la revendication 3, dans lequel la demande comprend par ailleurs un identificateur d'utilisateur du premier terminal et, avant d'envoyer (201) la demande d'un emplacement d'un dispositif à un serveur, le procédé comprend par ailleurs le fait de:
établir une rapport étroit entre l'identificateur d'utilisateur du premier terminal et l'identificateur du dispositif; et
envoyer le rapport étroit au serveur.

5. Serveur, comprenant:
un processeur; et
une mémoire configurée pour mémoriser une instruction pouvant être exécutée par le processeur;
dans lequel le processeur est configuré pour réaliser le procédé selon la revendication 1 ou 2.

6. Premier terminal, comprenant:
un processeur; et
une mémoire configurée pour mémoriser une instruction pouvant être exécutée par le processeur;
dans lequel le processeur est configuré pour réaliser le procédé selon la revendication 3 ou 4.

7. Support de mémoire lisible par ordinateur présentant, y mémorisées, des instructions qui, lorsqu'elles sont exécutées par un processeur d'un dispositif, font que le dispositif réalise un procédé selon l'une quelconque des revendications 1 à 4.
